# EUROPEAN PATENT SPECIFICATION

(11) **EP 4 310 665 B1**
(45) Date of publication and mention of the grant of the patent: **04.03.2026**
(21) Application number: 23186509.8
(22) Date of filing: 19.07.2023
(51) Int. Cl.: G06F 3/16

(54) **APPARATUS AND METHODS FOR USE WITH A VOICE ASSISTANT**
VORRICHTUNG UND VERFAHREN ZUR VERWENDUNG MIT EINEM SPRACHASSISTENTEN
APPAREIL ET PROCÉDÉS DESTINÉS À ÊTRE UTILISÉS AVEC UN ASSISTANT VOCAL

(30) Priority: 19.07.2022 US 202217868173
(43) Date of publication of application: 24.01.2024
(73) Proprietor: Jaguar Land Rover Limited, Coventry, Warwickshire CV3 4LF (GB)
(72) Inventor: Pham, Thai Hai, Portland (US); Gupta, Vivek, Portland (US); Oyedele, Mobolaji, Portland (US); Shelby, Collin, Portland (US); Miller, Cliff, Portland (US); Smith, Carl, Portland (US); Gupta, Banita, Portland (US)
(74) Representative: Jaguar Land Rover Patents Department

(56) References cited:
- EP-A1- 4 044 634
- WO-A1-2021/260714
- US-A1- 2018 137 266
- US-A1- 2019 057 703
- GENGRAS VOLVO EAST HARTFORD: "How to use the Volvo Cars App", 3 May 2022 (2022-05-03), XP093108710, Retrieved from the Internet <URL:https://www.youtube.com/watch?v=B83fiR0cyk4> [retrieved on 20231204]

## Description

### TECHNICAL FIELD

The present disclosure relates to apparatus and methods for use with a voice assistant. Aspects of the invention relate to a control system for a voice assistant system, to a system, to a method and to computer software.

### BACKGROUND

It is known to provide a voice assistant or digital personal assistant (DPA) which are functionality built into either a dedicated device or hosted on a computing device which allows a user to interact with the device using spoken commands. For example, the user may speak a name of the voice assistant or DPA, or a customised wake-up word, to activate or wake up the voice assistant followed by a command or question. For example, the user may speak 'Sebastian, what is the weather like now?" where Sebastian is a name assigned to the voice assistant which is followed by the command in the form of a question about the weather, as an example. The device implementing the voice assistant communicates an indication of the spoken commands, such as audio data containing the spoken commands, to a server or cloud computing system associated with the voice assistant for analysis and acting upon, such as by formulating an audible response thereto. The response is returned to the device and output as an audible response. The server of the voice assistant may have a set of functionality for acting upon commands or answering questions.

It is possible for third party developers to expand a functionality of a voice assistant by providing additional applications which interact with the voice assistant system. For example. An additional application may be hosted on the same or a different server or cloud computer to that of the voice assistant. The additional application defines a set of commands which may be accessed by the voice assistant. The application receives an indication of commands and data from the voice assistant to provide the additional functionality and returns appropriate data in response, which the voice assistant uses to form an audible response. In some instances the additional application may be associated with a vehicle, such as provided by a vehicle manufacturer. The additional application may provide a plurality of actions or functions which may each be invoked by the user using appropriate voice commands, an indication of which is passed to a device or computer hosting the additional application. One such function may be provided to determine whether a user's vehicle is locked. The additional application receives an indication from the voice assistant querying the lock status of the user's vehicle. The additional application communicates with the vehicle to determine the lock status and a corresponding indication is returned from the additional application to the voice assistant. The voice assistant may output a response, or respond, to the user with a spoken response indicating, for example, that the vehicle is locked.

US2019057703 describes a voice assistance system which may include an interface configured to receive a signal indicative of a voice command made to a first device. The system may also include at least one processor configured to: extract an action to be performed according to the voice command, locate a second device implicated by the voice command to perform the action, access data related to the second device from a storage device based on the voice command, and generate a control signal based on the data for actuating a control on at least one of the first device and the second device according to the voice command.

WO2021/260714 describes an interactive protection system of a vehicle. The interactive protection system comprises an instrument cluster comprising a cluster controller for generating vehicle information based on vehicular sensor data and at least one vehicle wireless transceiver for communicating the generated vehicle information to a voice assistant partially embodied in a user device. Further, the interactive protection system comprises an audio system, disposed proximal to a head of a user, for generating user information and an audio wireless transceiver for receiving the vehicle information from the voice assistant and transmitting the user information to the instrument cluster through the voice assistant for subsequent generation of the vehicle information. The audio system is worn by the user directly or disposed proximal to an inner surface of a protective gear worn by the user of the vehicle.

It is desired to make use of such additional functions more convenient for users of the voice assistant system. It is an aim of the present invention to address one or more of the disadvantages associated with the prior art.

### SUMMARY OF THE INVENTION

Aspects and embodiments of the invention provide a control system, a system, a method and computer software as claimed in the appended claims.

According to an aspect of the present invention there is provided a control system as defined in claim 1. Advantageously by invoking the task handler to perform the plurality of actions, each action does not need to be separately invoked. Advantageously reduced communication is required to perform the plurality of actions. Advantageously the response combines an output of the plurality of actions which may thereby improve efficiency. Advantageously the user does not need to use the voice assistant system to request each of the plurality of actions. Advantageously at least some of the actions may interact with the vehicle.

Each of the actions may be independently invokable by the voice assistant system. Advantageously each action may be independently requested, or the task may be requested thereby providing flexibility.

Optionally at least some of the plurality of actions each correspond to a request for data from the vehicle. Advantageously data may be obtained from the vehicle, which may be indicative of a state of the vehicle. The processing means may be arranged to communicate with the vehicle to obtain the data and to generate the response in dependence on the data. Advantageously the voice assistant system is provided with the response in dependence on the vehicle data.

A first action optionally comprises obtaining data indicative of a status of the vehicle. Advantageously the voice assistant system is provided with an indication of the status.

A second action optionally comprises obtaining data indicative of a calculated range of the vehicle. Advantageously the voice assistant system is provided with an indication of the range of the vehicle.

A third action optionally comprises activating a security mode of the vehicle. The security mode may be a high-security mode of the vehicle. Advantageously the security mode of the vehicle can be configured using the voice assistant system.

At least some of the plurality of actions each correspond to a request for the vehicle to perform a respective function. Advantageously the voice assistant system may be used to cause the vehicle to perform those functions. The processing means may be arranged to communicate with the vehicle to cause the vehicle to perform the respective functions.

The processing means may be arranged to receive data indicative of the function being performed by the vehicle and to generate the response in dependence thereon. Advantageously the voice assistant system is provided with an indication that the function has been performed. The voice assistant may provide an audible indication in dependence thereon.

Optionally one or more of the functions comprises an instruction to cause the vehicle to actuate an aperture of the vehicle. Advantageously the aperture may be actuated via the voice assistant system.

The actuation may be to close or open the aperture. The aperture may be a door or window of the vehicle. Advantageously the door or window may be actuated via the voice assistant system.

According to yet another aspect of the invention, there is provided a system, comprising a control system as herein disclosed, and a server for a voice assistant system arranged to provide the request to the control system indicative of the task requested by the user and to receive the response from the control system.

The server may be arranged to communicate the request to the control system according to a predetermined routine.

According to another aspect of the invention, there is provided a computer-implemented method as defined in claim 11.

The method may comprise communicating with the vehicle to perform at least some of the plurality of actions.

At least some of the plurality of actions may each correspond to a request for data from the vehicle. The method optionally comprises communicating with the vehicle to obtain the data and generating the response in dependence on the data.

A first action optionally comprises obtaining data indicative of a status of the vehicle. A second action optionally comprises obtaining data indicative of a calculated range of the vehicle.

At least some of the plurality of actions may each correspond to a request for the vehicle to perform a respective function. The method optionally comprises communicating with the vehicle to cause the vehicle to perform the respective functions.

The method optionally comprises receiving data indicative of the function being performed by the vehicle and to generating the response in dependence thereon.

One or more of the functions may comprise an instruction to cause the vehicle to actuate an aperture of the vehicle.

**The** generating the task handler optionally comprises defining an interface for the task handler to receive data associated with each of the plurality of actions. Advantageously the task handler is configured to receive data appropriate for those actions.

According to another aspect of the invention, there is provided computer readable instructions which, when executed by a computer, are arranged to perform a method as described above. **The** computer readable instructions may be tangibly stored on a computer readable medium. **The** computer readable medium may be non-transitory. **The** computer readable instructions may comprise computer software.

### BRIEF DESCRIPTION OF THE DRAWINGS

One or more embodiments of the invention will now be described, by way of example only, with reference to the accompanying drawings, in which:
Figure 1 shows a control system for a voice assistant system according to an embodiment of the invention;
Figure 2 shows an illustration of a system according to an embodiment of the invention;
Figure 3 illustrates a schematic of functionality of a control system;
Figure 4 shows an illustration of a method according to an embodiment of the invention;
Figure 5 illustrates a schematic of functionality of a control system according to an embodiment of the invention;
Figure 6 shows an illustration of a method according to another embodiment of the invention; and
Figure 7 shows an illustration of correspondingly requested intents according to an embodiment of the invention.

### DETAILED DESCRIPTION

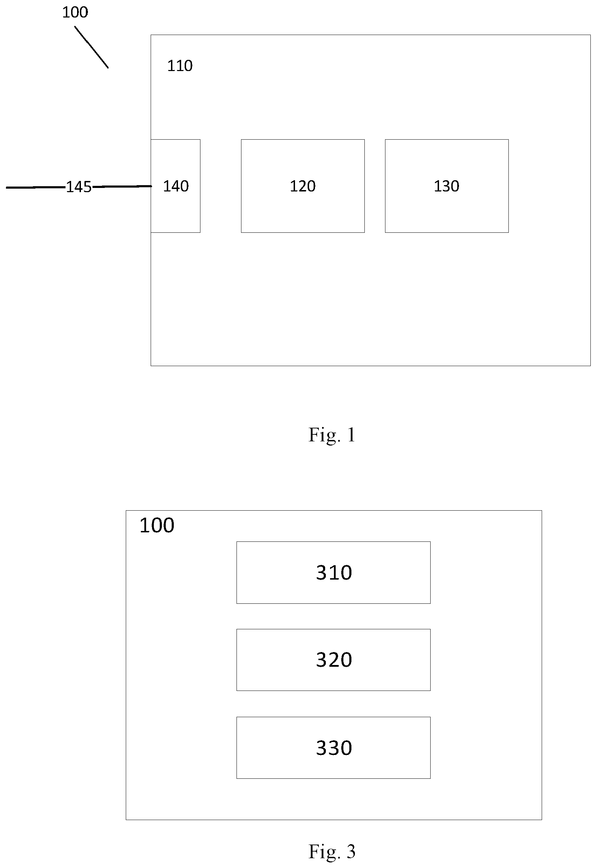

With reference to Figure 1, there is illustrated control system 100 for a voice assistant system according to an embodiment of the invention. The control system 100 is for implementing actions which may be associated with a vehicle. The control system 100 comprises one or more controller 110, although it will be appreciated that this is merely illustrative. The controller 110 comprises processing means 120 and memory means 130. The processing means 120 may be one or more electronic processing device 120 or processors 120 which operably execute computer-readable instructions. The memory means 130 may be one or more memory device 130. The memory means 130 is electrically coupled to the processing means 120. The memory means 130 is configured to store instructions, and the processing means 120 is configured to access the memory means 130 and execute the instructions stored thereon.

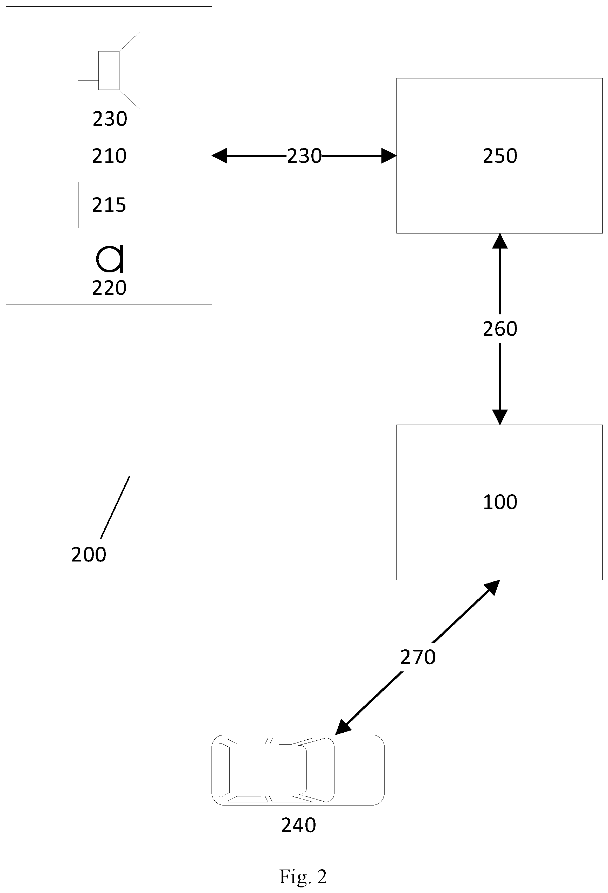

The controller 110, and thus the control system 100, comprises an input means and an output means. The input means 140 may comprise an electrical input of the controller 110. The output means may comprise an electrical output of the controller 110. In the embodiment illustrated in Figure 1 the input means and output means are combined as an I/O means 140 of the controller 110 which is an interface 140 of the controller 110 for interfacing with the voice assistant system, as will be explained. The interface 140 may be a network interface 140 for communicating data 145 with an external network such as a computer network, which may be the Internet. The data may be communicated via the network to/from the voice assistant system. The interface 140 of the controller 110 is configured to receive data representing a request from the voice assistant system, and to output data representing a response to the voice assistant system as will be explained particularly with reference to Figure 2.

Figure 2 illustrates a system 200 according to an embodiment of the invention which comprises the control system 100 described above in connection with Figure 1. The system 200 comprises a voice assistant device 210 which communicates with an associated voice assistant server 250, which may be implemented as a cloud server. The voice assistant server 250 and the voice assistant device are communicably coupled.

The voice assistant device 210 comprises at least one processor or processing device 215, a microphone 220 for generating audio data and a speaker 230 for converting an audio signal into audible sound. The voice assistant device 210 also comprises a memory storing computer-readable instructions which are executed by the processor 215 and a communication module for communicating with the voice assistant server 250, such as via the internet using wired, wireless, or a combination thereof, communication.

The voice assistant server 250 is communicably coupled with the control system 100. In one embodiment, the control system 100 and the voice assistant server 250 may share one or more computing resources i.e. may be implemented on the same computer system, or may be implemented on separate computer systems which communicate via one or more networks such as over the internet.

The control system 100 is associated with a vehicle 240. The control system 100 is provided for implementing actions associated with the vehicle 240. An action may be a request for information associated with the vehicle 240, such as an indication of a status of the vehicle 240 or one or more of its sub-systems, or the action may be a request to control the vehicle 240 or one or more of its sub-systems. For example, the action may comprise a request for an indication of a range of the vehicle 240 using its current fuel load, such as a battery charge level of the vehicle 240, or the action may be a request to close a window or to lock the vehicle 240. Other actions may be envisaged. The vehicle 240 is associated with a user of the voice assistant device 210. In use, the system 200 may comprise a plurality of voice assistant devices 210 each associated with a respective one of a plurality of vehicles 240. The user of each voice assistant device is able to perform actions with respect to their specific vehicle 240. However, for clarity one vehicle 240 and one voice assistant device 210 are described.

The control system 100 is arranged to have registered with the voice assistant server 250, such that the voice assistant server 250 is aware of the presence of the control system 100. For example, the voice assistant server is aware of an identification of the control system 100, such as a name of the control system 100. The voice assistant server 250 may associate the control system with a name 'Jaguar Land Rover' as an example. The voice assistant server 250 is aware of one or more actions provided by the control system 100 for the voice assistant server 250. For example, the control system 100 may provide an action 'range' which in response to a request for 'range' returns a numeric value indicative of the remaining range of the vehicle 240. Similarly, the control system 100 may provide an action 'lock' for locking the doors of the vehicle 240 which, in response to a corresponding request, returns a binary value indicative of the success of the locking of the vehicle doors. It will be realised that other actions may be provided by the control system 100 to the voice assistant server 250.

Figure 3 illustrates the control system 100 providing three actions 310, 320, 330 to the voice assistant server 250. Each of the actions 310, 320, 330 is independently invokable by the voice assistant server 250. For example, a first action 310 is the action 'range', a second action 320 is the action 'lock', as described above, and a third action 330 is an action to set a high-security mode of the vehicle 240. Each of the three actions may be requested using a corresponding request by the voice assistant server 250 and each may return a corresponding, respective, response such as comprising data obtained from the vehicle 240 indicative of success of an operation at the 240. Each action may be invoked by the voice assistant server 250 communicating with the control system 100. For example, the voice assistant server 250 may send a request identifying the first action 310. The request may comprise data required to perform the first action 310. In response, the control system 100 sends a corresponding response to the voice assistant server 250.

The voice assistant device 210 listens using its microphone 220 for audio representing a Wake up Word (WuW), such as 'Sebastian' i.e. a name of the voice assistant, which is followed by a spoken command corresponding to an action. For example, a combination of WuW and action may be 'Sebastian, what is the range of my vehicle?' The processor 215 performs an initial analysis of audio data provided by the microphone 220 corresponding to and following the WuW to make an initial confirmation of recognition of the WuW in the audio data. If the initial confirmation is positive, then the audio data is communicated 230 to the voice assistant server 250. The voice assistant server 250 is arranged to analyse the audio data to confirm the presence of the WuW in the audio data. Upon confirming the presence of the WuW, the voice assistant server 250 is arranged to perform speech recognition on the audio data following the WuW in order to determine the command present in the audio data following the WuW. In the example, the command corresponds to 'what is the range of my vehicle?'.

The voice assistant server 250, being aware of the actions provided by the control system 100, analyses the speech contained within the audio data to identify one or more actions requested by the user. For example, the voice assistant server 250 recognises that the speech 'what is the range of my vehicle?' corresponds to a request for the first action 310 'range' provided by the control system 100. The voice assistant server 250 then communicates 260 a request for the action to the control system 100.

However, it has been recognised that, frequently, users of such voice assistant systems request a plurality of actions in close temporal proximity. For example, it has been observed that a user typically requests an indication of the remaining range of their vehicle 240, requests to lock the doors of their vehicle 240, and requests activation of a high-security setting of their vehicle 240 e.g. in an evening such as when they have finished using their vehicle 240 for the day. It will be appreciated that these are example actions and that other actions may be requested. Requesting each of these actions individually is inconvenient for the user and, furthermore, additional communication is required between the voice assistant server 250 and the control system 100 to separately request each action and to communicate a response of the control system 100 to the voice assistant server 250 for each action. Embodiments of the present invention aim to address one or more of these, or other, disadvantages.

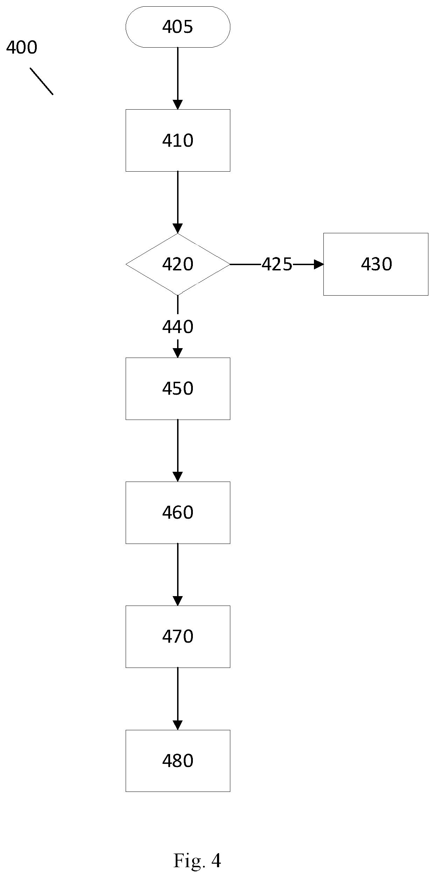

Figure 4 illustrates a method 400 according to an embodiment of the invention. The method 400 is a method for use with a voice assistant system 200. The method 400 is for implementing a task associated with a vehicle 240, such as the vehicle 240 illustrated in Figure 2. The method 400 may be performed by the control system 100 illustrated in Figure 1. In particular, the memory 130 of the control system 100 may comprise computer-readable instructions which, when executed by the processor 120, perform the method 400 according to an embodiment of the invention. In use, the control system 100 acts in cooperation with the voice assistant server 250 described above and as will be explained further below.

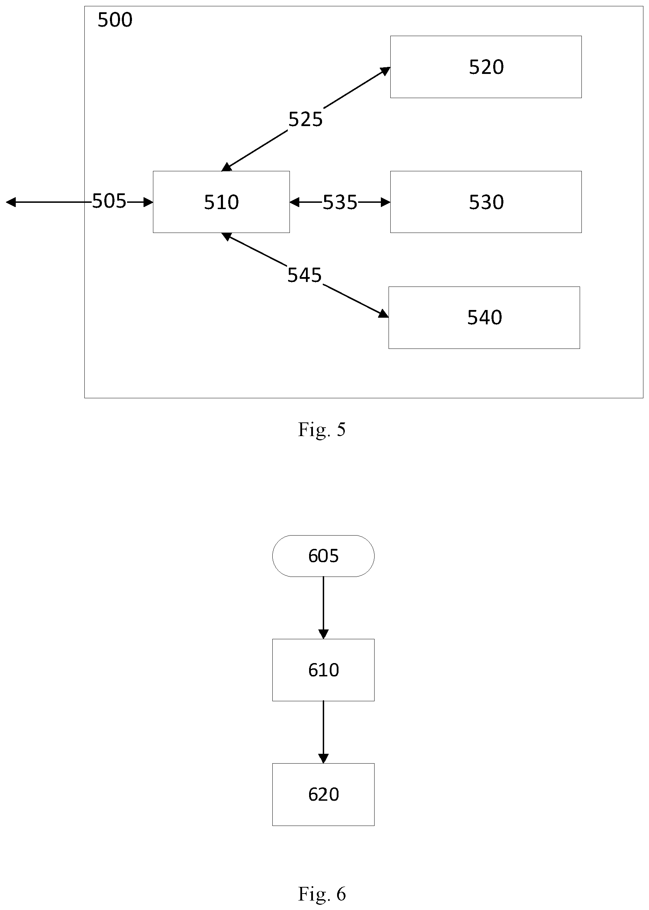

Reference will also be made to Figure 5 which schematically illustrates functionality of a control system 500 according to an embodiment of the invention. The control system 500 comprises a task handler 510 and is configured to provide three actions 520, 530, 540 to the voice assistant server 250. The control system 500 may comprise more than one task handler 510. However, for ease of explanation, the control system 500 is described as comprising one task handler 510. Each of the actions 520, 530, 540 and the task handler 510 is associated with a respective identifier or name which is used to invoke the corresponding action 520, 530 or task handler 510. When a request 505 is received by the control system 500 indicative of the associated name, said corresponding action 520, 530, 540 or task handler 510 is invoked or executed by the control system 500 i.e. by processor 510.

The method 400 starts at block 405 and comprises a block 410 of receiving a request 505 at the control system 100 from the voice assistant server 250. The request 505 is communicated 260 to the control system 100, such as via one or more data networks e.g. computer and/or telecommunications networks, for example over the Internet. In some embodiments where the control system 100 is functionally integral or co-located with the voice assistant server 250 the request 505 may be communicated via a memory or a local network to a processor 120 of the control system 100. The request 505 may comprise identifying information indicating a name of an action or task requested by the voice assistant server 250 i.e. corresponding to the user's spoken voice command. The request 505 may comprise data associated with the request, such as data identifying a user from whom the request originated i.e. user of the voice assistant device 210 and/or identifying the vehicle 240. The request 505 may identify a task associated with the request 505. As described above, the control system 500 may, for example, support three independently invokable actions 520, 530, 540 i.e. which may each be separately requested and provide a separate response. An action may correspond to an intent supported by the Amazon (RTM) Alexa (RTM) voice assistant system, for example. A task corresponds to a request for a plurality of actions, i.e. more than one of the actions 520, 530, 540, to be performed by the control system 500 and a combined response to be returned to the voice assistant server 250.

In block 420 it is determined whether the received request 505 is a request for an action supported by the control system 500 or a task corresponding to the task handler 510 supported by the control system 500, such as shown in Figure 5. In block 420 identifying information associated with the request 505 may be compared against the identifiers or names of each of the task handler 510 (or each of a plurality of task handlers supported by the control system 100) and each of the actions 520, 530, 540 to determine a corresponding one thereof. In an example, the name associated with the request 505 corresponds to that of the task handler 510. For example, the request 505 may be indicative of a name of a 'Goodnight' task associated with the task handler 510.

If the request 505 corresponds to one of the actions in block 420, the method 400 follows 425 to block 430 where a corresponding one of the actions 520, 530, 540 is invoked. If, however, the request 505 corresponds to the task handler 510, or one of the task handlers provided by the control system 500, the method 400 moves to block 450 wherein the corresponding task handler 510 is invoked or executed. In this example, the 'Goodnight' task handler 510 is invoked in block 450 corresponding to the received request 505.

The, or each, task handler 510 defines a plurality of actions 520, 530, 540 to be performed as part of the task. In the described example, the 'Goodnight' task defines all three of the actions 520, 530, 540, or intents, provided by the control system 500. That is, invoking the task handler 510 for the 'Goodnight' task causes all three of the actions 520, 530, 540 to be performed by the control system 500. Thus, the request 505 may provide any data necessary for all three of the actions 520, 530, 540 to be executed in dependence on the task handler 510. That is, the request indicative of the 'Goodnight' task may comprise data associated with each of the plurality of actions 520, 530, 540 to be performed as part of the task. In this sense, the request for the 'Goodnight' task is a combined request 505 which comprises data necessary to perform all of the plurality of actions 510, 520, 530 with which it is associated. The task handler 510 defines which data of the request 505 is provided to each action of the plurality of actions 520, 530, 540. For example, a first part of data of the request 505 is provided to the first action 520 and a second part of the data of the request 505 is provided to the second action 530, etc.

As an example, a first action 510 requests an indication of the remaining range of the vehicle 240, a second action 520 requests to lock the doors of the vehicle 240, and a third action causes activation of a high-security setting of their vehicle 240.

In block 460 each of the actions 520, 530, 540 defined by the task handler 510 are invoked or executed as requested by the task handler 510. For example, each of the three actions 520, 530, 540 in this example may be sequentially invoked by the control system 500. The task handler 510 may define an order or execution of each action and/or whether at least some of the plurality of actions 520, 530, 540 may be performed in parallel. Each of the actions 520, 530, 540 may cause the control system 500 to communicate 270 with the vehicle 240, for example to request data or to request the vehicle 240 to perform a respective function i.e. to carry out an activity at the vehicle 240, such as to change a state or configuration or one or more systems of the vehicle 240. For example, one or more functions may comprise an instruction to cause the vehicle 240 to actuate an aperture or opening of the vehicle 240. The instruction may be to close or open an identified aperture of the vehicle 240. The aperture may be a door or window of the vehicle 240. That is, one or more of the actions may cause e.g. the windows of the vehicle 240 to close in order to secure the vehicle 240.

In order to advantageously reduce communication with the voice assistant server 250, where more than one of the actions 520, 530, 540 returns a response, such as an indication of the range of the vehicle or confirmation that the doors are locked and the high-security setting is activated, the task handler 510 is configured to collate the outputs of each of the actions 520, 530, 540 to form a combined response in block 470. That is, the task handler 510 receives the output of each of the actions 520, 530, 540 and assembles the combined response including data from each of the plurality of actions 520, 530, 540. The task handler may define a structure of the response, such that the voice assistant server 250 is informed that e.g. first data in the response corresponds to the range, second data is confirmation of the vehicle 240 being locked etc.

In block 480 the combined response is communicated 260 to the voice assistant server 250. At the voice assistant server 250 a response to the voice assistant device 210 is generated, such that at the voice assistant device 210 an audible response is output in dependence thereon. The audible output may, for example, provide an audible output conveying the range of the vehicle 240 provided as part of the combined response from the control system 500, an indication that the doors of the vehicle are locked and that the high-security setting is activated. For example, the voice assistant device 210 may audible output 'The remaining range of your Jaguar is 210km, the doors are locked and the vehicle is in a high-security mode'. Thus as can be appreciated, the user has been able to make a single audible request such as 'Sebastian, Goodnight to my Jaguar' which invokes the task handler 510 upon the control system 100, 500 to correspondingly invoke each of the plurality of actions 520, 530, 540.

Figure 6 illustrates a further method 600 according to an embodiment of the invention. The method 600 illustrated in Figure 6 is a method of generating a task handler 510 which is arranged to cause a control system i.e. the control system 100, 500 illustrated in Figures 1 and 5 to perform a plurality of actions 520, 530, 540 associated with the task handler 510, as will be explained.

As described above in relation to Figure 3, it has been observed that a user of a voice assistant device 210 to independently invoke actions 520, 530, 540 provided by a control system 100 via the voice assistant server 250. It has been observed that users frequently invoke a plurality of actions 520, 530, 540 provided by the control system 100 in temporal proximity. That is, the user may request, via voice activation, that the control system 100 invokes the plurality of actions 520, 530, 540 at approximately the same time, or within a short time period. Thus the user expresses a desire for related-invocation of the plurality of actions 520, 530, 540 by the control system 100. It will be appreciated that the plurality of actions which may be invoked by the user in temporal-relation may be a subset of those provided by the control system 100.

In embodiments of the invention, the control system 100 is arranged to store data indicative of an invocation time of each action 520, 530, 540. That is, "invocation time" is understood to mean a time at which each action 520, 530, 540 is invoked by each respective user of a voice control device 210, rather than a duration of invocation.

The method 600 may be performed by the processor 120 of the control system 100 in some embodiments. It will be appreciated, however, that the method 600 may be performed by the processor of another computing device utilising the data indicative of the invocation time of each action 310, 320, 330 produced by the control system 100.

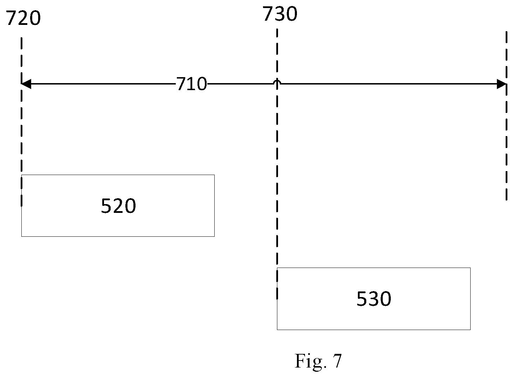

The method 600 begins at block 605. In block 610 a plurality of actions, or intents in some embodiments, which are invoked within a predetermined period of time 710 are identified. Referring to Figure 7, invocation of two actions 520, 530 by the control system 100 is illustrated. A first action 520 is invoked at a time 720 and a second action 530 is invoked at a time 730. As explained above, each action 520, 530 is invoked in response to a received request from the voice assistant server 250. A duration of the predetermined period of time is illustrated in Figure 7. The predetermined period of time 710 begins upon invocation of a first action 520 in this example the action 520. Thus a plurality of actions invoked within the predetermined period of time upon the control system 100 are identified in block 610. For example, the first action 520 may be an action 'range' which returns a numeric value indicative of the remaining range of the vehicle 240 and the second action may be an action 'lock' for locking the doors of the vehicle 240. It will be appreciated that other actions may be identified and, furthermore, block 610 is not limited to identifying two actions and that two or more actions may be identified as being invoked within the predetermined period of time 710 in block 610. In some embodiments, the plurality of actions 520, 530 are identified in dependence on a frequency of performance in temporal proximity. For example, when the plurality of actions 520, 530 are performed more than a predetermined number of times in proximity, or as a predetermined number of most frequently performed actions in temporal proximity.

Thus in block 610 a plurality of actions 520, 530 are selected by the control system 100 in dependence on those actions being historically performed in temporal proximity.

In block 620 a task handler 510 is generated. The task handler is generated such that, when invoked by a received request for the task handler, the task handler is configured to invoke the plurality of actions 520, 530 in dependence on the request. The task hander 510 is associated with a respective task, such as 'Goodnight' as described above, and is configured to perform the plurality of actions 520, 530 associated with the task, to generate a response in dependence on an output of at least some of the plurality of actions 510, 520 and to output the response to the voice assistant system 200.

Generating the task handler 510 in block 620 comprises defining an interface for the task handler to receive data associated with each of the plurality of actions 520, 530, 540. The interface is configured to receive data to perform each of the plurality of actions. The interface may also receive data returned from each of the plurality of actions, such that the task handler 510 can generate a response to the voice assistant system 200 in dependence on an output of at least some of the plurality of actions. The task handler 510 outputs the response to the voice assistant system 200 as a combined response i.e. comprising a response of each of the plurality of actions 520, 530, 540.

Whilst embodiments of the invention have been described with reference to actions associated with a vehicle, it will be appreciated that embodiments of the invention may be envisaged which are not associated with a vehicle. For example, embodiments of the invention may be associated with, for example, an loT system or an automated home control system although it will be appreciated that this is not limiting. As an example, where the control system 100, 500 is associated with a home control system a first action may be arranged to actuate, such as to close, a first window of a home associated with the control system, a second action may be arranged to activate or turn on one or more lights of the home and a third action may be arranged to activate a home appliance. A corresponding task handler may be configured to perform the second and third actions in response to a request from a voice assistant system. Thus it can be appreciated that embodiments of the present invention are not restricted to use with vehicles.

## Claims

1. A control system (100, 500) for a voice assistant system (200) for implementing actions (520, 530, 540) associated with a vehicle (240), the control system (110) comprising one or more controllers (110), the control system comprising:
an interface (140) configured to receive a request (505) from the voice assistant system (200), wherein the request is indicative of an individual action or a task requested by a user of the voice assistant system (200); and
processing means (120) arranged to, prior to execution of the individual action or the task, determine whether the received request (505) is a request for an individual action or a task to which a plurality of individual actions are associated;
wherein:
if the received request (505) is a request for an individual action, the processing means is arranged to perform the individual action; and
if the received request (505) is a request for a task, the processing means is arranged to execute a task handler (510) corresponding to the task, wherein the task handler (510) is arranged to cause the control system (100) to perform the plurality of individual actions (520, 530, 540) associated with the task, to generate a response in dependence on an output of at least some of the plurality of individual actions (520, 530, 540) and to output the response via the interface (140) to the voice assistant system (200); and
wherein the processing means is further configured to:
identify when an individual action and at least one further individual action are performed more than a predetermined number of times in temporal proximity, and
generate a new task handler associated with a task that is configured to perform said individual action and said at least one further individual action when the new task handler is invoked.

2. A control system according to claim 1, wherein the processing means (120) is arranged to communicate with the vehicle to perform at least some of the plurality of individual actions.

3. A control system according to claim 2, wherein at least some of the plurality of individual actions (520, 530, 540) each correspond to a request for data from the vehicle (240) and the processing means (120) is arranged to communicate with the vehicle (240) to obtain the data and to generate the response in dependence on the data.

4. A control system according to claim 2 or 3, wherein a first action comprises obtaining data indicative of a status of the vehicle (240).

5. A control system according to claim 2, 3 or 4, wherein a second action comprises obtaining data indicative of a calculated range of the vehicle (240).

6. A control system according to any one of claims 2 to 5, wherein at least some of the plurality of individual actions each correspond to a request for the vehicle to perform a respective function, and the processing means is arranged to communicate with the vehicle (240) to cause the vehicle to perform the respective functions.

7. A control system according to claim 6, wherein the processing means is arranged to receive data indicative of the function being performed by the vehicle (240) and to generate the response in dependence thereon.

8. A control system according to claim 6 or 7, wherein one or more of the functions comprises an instruction to cause the vehicle to actuate an aperture of the vehicle (240).

9. A system, comprising:
a control system (100, 500) according to any preceding claim; and
a server (250) for a voice assistant system (200) arranged to provide the request (505) to the control system indicative of the task requested by the user and to receive the response from the control system.

10. The system of claim 9, wherein the server (250) is arranged to communicate the request to the control system (100, 500) according to a predetermined routine.

11. A computer-implemented method performed by a control system, for a voice assistant system for implementing
actions associated with a vehicle (240), comprising:
receiving (410) a request (505) from a voice assistant system (200), wherein the request is indicative of an individual action or a task requested by a user of the voice assistant system;
determining, prior to execution of the individual action or the task, whether the received request (505) is a request for an individual action or a task to which a plurality of individual actions are associated;
if the received request (505) is a request for an individual action, performing the individual action;
if the received request (505) is a request for a task, executing (450) a task handler (510) corresponding to the task, wherein the task handler (510) is arranged to cause performance of the plurality of individual actions associated with the task, to generate a response in dependence on an output of at least some of the plurality of individual actions; and
outputting (480) the response to the voice assistant system (200),
wherein the method further comprises:
identifying when an individual action and at least one further individual action are performed more than a predetermined number of times in temporal proximity, and
generating a new task handler associated with a task that is configured to perform said individual action and said at least one further individual action when the new task handler is invoked.

12. The control system according to any one of claims 1 to 8, wherein the generating the new task handler comprises defining an interface for the new task handler to receive data associated with each of the plurality of individual actions.

13. Computer readable instructions which, when executed by a computer, cause the computer to carry out the method according to claim 11.

## Patentansprüche

1. Steuersystem (100, 500) für ein Sprachassistenzsystem (200) zum Implementieren von Aktionen (520, 530, 540), die mit einem Fahrzeug (240) verknüpft sind, das Steuersystem (110) umfassend eine oder mehrere Steuervorrichtungen (110), das Steuersystem umfassend:
eine Schnittstelle (140), die konfiguriert ist, um eine Anforderung (505) von dem Sprachassistenzsystem (200) zu empfangen, wobei die Anforderung eine einzelne Aktion oder eine Aufgabe, die durch einen Benutzer des Sprachassistenzsystems (200) angefordert wird, angibt; und
ein Verarbeitungsmittel (120), das angeordnet ist, um, vor Ausführung der einzelnen Aktion oder der Aufgabe, zu bestimmen, ob die empfangene Anforderung (505) eine Anforderung für eine einzelne Aktion oder eine Aufgabe ist, mit der eine Vielzahl von einzelnen Aktionen verknüpft sind;
wobei:
falls die empfangene Anforderung (505) eine Anforderung für eine einzelne Aktion ist, das Verarbeitungsmittel angeordnet ist, um die einzelne Aktion durchzuführen; und
falls die empfangene Anforderung (505) eine Anforderung für eine Aufgabe ist, das Verarbeitungsmittel angeordnet ist, um einen Aufgabenhandler (510), der der Aufgabe entspricht, auszuführen, wobei der Aufgabenhandler (510) angeordnet ist, um das Steuersystem (100) zu veranlassen, die Vielzahl von einzelnen Aktionen (520, 530, 540), die mit der Aufgabe verknüpft sind, durchzuführen, eine Antwort in Abhängigkeit von einer Ausgabe mindestens einiger der Vielzahl von einzelnen Aktionen (520, 530, 540) zu erzeugen und die Antwort über die Schnittstelle (140) an das Sprachassistenzsystem (200) auszugeben; und
wobei das Verarbeitungsmittel ferner konfiguriert ist zum:
Identifizieren, wenn eine einzelne Aktion und mindestens eine weitere einzelne Aktion mehr als eine zuvor bestimmte Anzahl von Malen in zeitlicher Nähe durchgeführt werden, und
Erzeugen eines neuen Aufgabenhandlers, der mit einer Aufgabe verknüpft ist, konfiguriert, um die einzelne Aktion und die mindestens eine weitere einzelne Aktion durchzuführen, wenn der neue Aufgabenhandler aufgerufen wird.

2. Steuersystem nach Anspruch 1, wobei das Verarbeitungsmittel (120) angeordnet ist, um mit dem Fahrzeug zu kommunizieren, um mindestens einige der Vielzahl von einzelnen Aktionen durchzuführen.

3. Steuersystem nach Anspruch 2, wobei mindestens einige der Vielzahl von einzelnen Aktionen (520, 530, 540) jede einer Anforderung für Daten von dem Fahrzeug (240) entsprechen und das Verarbeitungsmittel (120) angeordnet ist, um mit dem Fahrzeug (240) zu kommunizieren, um die Daten zu erhalten und um die Antwort in Abhängigkeit von den Daten zu erzeugen.

4. Steuersystem nach Anspruch 2 oder 3, wobei eine erste Aktion das Erhalten von Daten, die einen Status des Fahrzeugs (240) angeben, umfasst.

5. Steuersystem nach Anspruch 2, 3 oder 4, wobei eine zweite Aktion das Erhalten von Daten, die eine berechnete Reichweite des Fahrzeugs (240) angeben, umfasst.

6. Steuersystem nach einem der Ansprüche 2 bis 5, wobei mindestens einige der Vielzahl von einzelnen Aktionen jede einer Anforderung für das Fahrzeug entsprechen, eine jeweilige Funktion durchzuführen, und das Verarbeitungsmittel angeordnet ist, um mit dem Fahrzeug (240) zu kommunizieren, um das Fahrzeug zu veranlassen, die jeweiligen Funktionen durchzuführen.

7. Steuersystem nach Anspruch 6, wobei das Verarbeitungsmittel angeordnet ist, um Daten zu empfangen, die die Funktion, die durch das Fahrzeug (240) durchgeführt wird, angeben und um die Antwort in Abhängigkeit davon zu erzeugen.

8. Steuersystem nach Anspruch 6 oder 7, wobei eine oder mehrere der Funktionen eine Anweisung umfasst, um das Fahrzeug zu veranlassen, eine Öffnung des Fahrzeugs (240) zu betätigen.

9. System, umfassend:
ein Steuersystem (100, 500) nach einem der vorstehenden Ansprüche; und
einen Server (250) für ein Sprachassistenzsystem (200), der angeordnet ist, um die Anforderung (505) an das Steuersystem, die die Aufgabe, die durch den Benutzer angefordert wird, angibt, bereitzustellen und um die Antwort von dem Steuersystem zu empfangen.

10. System nach Anspruch 9, wobei der Server (250) angeordnet ist, um die Anforderung an das Steuersystem (100, 500) gemäß einer zuvor bestimmten Routine zu kommunizieren.

11. Computerimplementiertes Verfahren, das durch ein Steuersystem, für ein Sprachassistenzsystem zum Implementieren von Aktionen, die mit einem Fahrzeug (240) verknüpft sind, durchgeführt wird, umfassend:
Empfangen (410) einer Anforderung (505) von einem Sprachassistenzsystem (200), wobei die Anforderung eine einzelne Aktion oder eine Aufgabe, die durch einen Benutzer des Sprachassistenzsystems angefordert wird, angibt;
Bestimmen, vor Ausführung der einzelnen Aktion oder der Aufgabe, ob die empfangene Anforderung (505) eine Anforderung für eine einzelne Aktion oder eine Aufgabe ist, mit der eine Vielzahl von einzelnen Aktionen verknüpft sind;
falls die empfangene Anforderung (505) eine Anforderung für eine einzelne Aktion ist, Durchführen der einzelnen Aktion;
falls die empfangene Anforderung (505) eine Anforderung für eine Aufgabe ist, Ausführen (450) eines Aufgabenhandlers (510), der der Aufgabe entspricht, wobei der Aufgabenhandler (510) angeordnet ist, um eine Durchführung der Vielzahl von einzelnen Aktionen, die mit der Aufgabe verknüpft sind, zu veranlassen, eine Antwort in Abhängigkeit von einer Ausgabe mindestens einiger der Vielzahl von einzelnen Aktionen zu erzeugen; und
Ausgeben (480) der Antwort an das Sprachassistenzsystem (200),
wobei das Verfahren ferner umfasst:
Identifizieren, wenn eine einzelne Aktion und mindestens eine weitere einzelne Aktion mehr als eine zuvor bestimmte Anzahl von Malen in zeitlicher Nähe durchgeführt werden, und
Erzeugen eines neuen Aufgabenhandlers, der mit einer Aufgabe verknüpft ist, konfiguriert, um die einzelne Aktion und die mindestens eine weitere einzelne Aktion durchzuführen, wenn der neue Aufgabenhandler aufgerufen wird.

12. Steuersystem nach einem der Ansprüche 1 bis 8, wobei das Erzeugen des neuen Aufgabenhandlers ein Definieren einer Schnittstelle für den neuen Aufgabenhandler umfasst, um Daten, die mit jeder der Vielzahl von einzelnen Aktionen verknüpft sind, zu empfangen.

13. Computerlesbare Anweisungen, die, wenn sie durch einen Computer ausgeführt werden, den Computer veranlassen, das Verfahren nach Anspruch 11 vorzunehmen.

## Revendications

1. Système de commande (100, 500) pour un système d'assistant vocal (200) permettant de mettre en œuvre des actions (520, 530, 540) associées à un véhicule (240), le système de commande (110) comprenant un ou plusieurs dispositifs de commande (110), le système de commande comprenant :
une interface (140) configurée pour recevoir une demande (505) en provenance du système d'assistant vocal (200), dans lequel la demande indique une action individuelle ou une tâche demandée par un utilisateur du système d'assistant vocal (200) ; et
un moyen de traitement (120) conçu pour déterminer, avant l'exécution de l'action individuelle ou de la tâche, si la demande reçue (505) est une demande pour une action individuelle ou une tâche à laquelle une pluralité d'actions individuelles sont associées ;
dans lequel :
si la demande reçue (505) est une demande pour une action individuelle, le moyen de traitement est conçu pour réaliser l'action individuelle ; et
si la demande reçue (505) est une demande pour une tâche, le moyen de traitement est conçu pour exécuter un gestionnaire de tâches (510) correspondant à la tâche, dans lequel le gestionnaire de tâches (510) est conçu pour amener le système de commande (100) à réaliser la pluralité d'actions individuelles (520, 530, 540) associées à la tâche, à générer une réponse en fonction d'une sortie d'au moins une partie de la pluralité d'actions individuelles (520, 530, 540) et à émettre la réponse par l'intermédiaire de l'interface (140) vers le système d'assistant vocal (200) ; et
dans lequel le moyen de traitement est en outre configuré pour :
identifier si une action individuelle et au moins une autre action individuelle sont réalisées plus d'un nombre prédéterminé de fois dans une proximité temporelle, et
générer un nouveau gestionnaire de tâches associé à une tâche qui est configurée pour réaliser ladite action individuelle et ladite au moins une autre action individuelle lorsque le nouveau gestionnaire de tâches est invoqué.

2. Système de commande selon la revendication 1, dans lequel le moyen de traitement (120) est conçu pour communiquer avec le véhicule afin de réaliser au moins une partie de la pluralité d'actions individuelles.

3. Système de commande selon la revendication 2, dans lequel au moins une partie de la pluralité d'actions individuelles (520, 530, 540) correspondent chacun à une demande pour des données provenance du véhicule (240) et le moyen de traitement (120) est conçu pour communiquer avec le véhicule (240) afin d'obtenir les données et de générer la réponse en fonction des données.

4. Système de commande selon la revendication 2 ou 3, dans lequel une première action consiste à obtenir de données indiquant un état du véhicule (240).

5. Système de commande selon la revendication 2, 3 ou 4, dans lequel la seconde action comprend l'obtention de données indiquant une portée calculée du véhicule (240).

6. Système de commande selon l'une quelconque des revendications 2 à 5, dans lequel au moins une partie de la pluralité d'actions individuelles correspondent chacune à une demande de réalisation d'une fonction respective par le véhicule, et le moyen de traitement est conçu pour communiquer avec le véhicule (240) afin d'amener le véhicule à réaliser les fonctions respectives.

7. Système de commande selon la revendication 6, dans lequel le moyen de traitement est conçu pour recevoir des données indiquant la fonction étant réalisée par le véhicule (240) et pour générer la réponse en fonction de ces dernières.

8. Système de commande selon la revendication 6 ou 7, dans lequel une ou plusieurs des fonctions comprennent une instruction pour amener le véhicule à actionner une ouverture du véhicule (240).

9. Système, comprenant :
un système de commande (100, 500) selon l'une quelconque revendication précédente ; et
un serveur (250) pour un système d'assistant vocal (200) conçu pour fournir la demande (505) au système de commande indiquant la tâche demandée par l'utilisateur et pour recevoir la réponse en provenance du système de commande.

10. Système selon la revendication 9, dans lequel le serveur (250) est conçu pour communiquer la demande au système de commande (100, 500) selon une routine prédéterminée.

11. Procédé mis en œuvre par ordinateur réalisé par un système de commande, pour un système d'assistant vocal permettant de mettre en œuvre des actions associées à un véhicule (240), comprenant :
la réception (410) d'une demande (505) en provenance d'un système d'assistant vocal (200), dans lequel la demande indique une action individuelle ou une tâche demandée par un utilisateur du système d'assistant vocal ;
le fait de déterminer, avant l'exécution de l'action individuelle ou de la tâche, si la demande reçue (505) est une demande pour une action individuelle ou une tâche à laquelle une pluralité d'actions individuelles sont associées ;
si la demande reçue (505) est une demande pour une action individuelle, la réalisation de l'action individuelle ;
si la demande reçue (505) est une demande pour une tâche, l'exécution (450) d'un gestionnaire de tâches (510) correspondant à la tâche, dans lequel le gestionnaire de tâches (510) est conçu pour provoquer la production de la pluralité d'actions individuelles associées à la tâche, pour générer une réponse en fonction d'une sortie d'au moins une partie de la pluralité d'actions individuelles ; et
l'émission (480) de la réponse vers le système d'assistant vocal (200),
dans lequel le procédé comprend en outre :
le fait d'identifier lorsqu'une action individuelle et au moins une autre action individuelle sont réalisées plus d'un nombre prédéterminé de fois dans une proximité temporelle, et
la génération d'un nouveau gestionnaire de tâches associé à une tâche qui est configurée pour réaliser ladite action individuelle et ladite au moins une autre action individuelle lorsque le nouveau gestionnaire de tâches est invoqué.

12. Système de commande selon l'une quelconque des revendications 1 à 8, dans lequel la génération du nouveau gestionnaire de tâches comprend la définition d'une interface pour le nouveau gestionnaire de tâches afin de recevoir des données associées à chacune de la pluralité d'actions individuelles.

13. Instructions lisibles par ordinateur qui, lorsqu'elles sont exécutées par un ordinateur, amènent l'ordinateur à effectuer le procédé selon la revendication 11.
